Europäisches Patentamt

European Patent Office

Office européen des brevets

(11) Veröffentlichungsnummer: **0 354 173**
**A1**

## (12) EUROPÄISCHE PATENTANMELDUNG

(21) Anmeldenummer: **89810470.8**

(22) Anmeldetag: **19.06.89**

(51) Int. Cl.⁵: **G 02 B 6/38**

(30) Priorität: **07.07.88 CH 2587/88**

(43) Veröffentlichungstag der Anmeldung:
**07.02.90 Patentblatt 90/06**

(84) Benannte Vertragsstaaten:
**AT BE CH DE FR GB IT LI LU NL SE**

(71) Anmelder: **Diamond SA**
**Via dei Patrizi 5**
**CH-6616 Losone (CH)**

(72) Erfinder: **Gerber, Hans**
**Via dei Colli 6**
**CH-6648 Minusio (CH)**

**Marazzi, Silvio**
**CH-6654 Cavigliano (CH)**

(74) Vertreter: **Wenger, René et al**
**Hepp, Wenger & Partner AG Marktgasse 18**
**CH-9500 Wil (CH)**

(54) **Verfahren zum Zentrieren einer Lichtleitfaser in einem Lichtleiterendstück und nach diesem Verfahren hergestelltes Lichtleiterendstück.**

(57) Die Lichtleitfaser (1) wird im Zentrierzylinder (2) dadurch zentriert, dass an dessen Stirnseite zuerst ein Kapillarröhrchen (5) vorzugsweise durch Kleben befestigt wird. Anschliessend wird das Kapillarröhrchen, bzw. dessen Bohrung (6) durch eine Materialdeformation genau auf die Mittelachse des Zentrierzylinders ausgerichtet, wobei der Aussenmantel (4) des Zentrierzylinders als Referenzfläche dient. Nach dem Einsetzen der Lichtleitfaser in das Kapillarröhrchen kann im Bedarfsfall noch ein Nachjustiervorgang stattfinden, bei welchem der Kern der Lichtleitfaser unter visueller Kontrolle nachjustiert wird.

Fig. 1a

Fig. 1d

EP 0 354 173 A1

## Beschreibung

## Verfahren zum Zentrieren einer Lichtleitfaser in einem Lichtleiterendstück und nach diesem Verfahren hergestelltes Lichtleiterendstück

Die Erfindung bezieht sich auf ein Verfahren zum Zentrieren einer Lichtleitfaser in einem Lichtleiterendstück gemäss dem Oberbegriff von Anspruch 1, sowie auf ein nach diesem Verfahren hergestelltes Lichtleiterendstück gemäss dem Oberbegriff von Anspruch 6. Es ist bereits hinreichend bekannt, dass in der optischen Uebertragungstechnik bei den Steckerverbindungen möglichst geringe Dämpfungswerte angestrebt werden. Es ist daher erforderlich, die Lichtleitfasern bezogen auf eine bestimmte Referenzoberfläche so genau wie möglich zu zentrieren.

Ein seit einiger Zeit bekanntes Verfahren besteht darin, dass die Lichtleitfaser im Zentrierzylinder zunächst nur provisorisch in eine möglichst präzise axiale Bohrung eingesetzt wird, während die endgültige Zentrierung durch eine Materialdeformation an der Stirnseite erfolgt. Es wird dabei eine möglichst exakte Zentrizität des Faserkerns bezogen auf den Aussenmantel des Zentrierzylinders angestrebt.

Durch die EP-A-94 906 sowie die EP-A-213 067 der Anmelderin sind bereits Verfahren bekannt geworden, bei denen die Materialdeformation mit Hilfe eines Prägestempels an der Stirnseite erfolgt. Damit lassen sich bereits äusserst niedrige Dämpfungswerte erzielen. Der Zentrierzylinder ist dabei zweiteilig ausgebildet und besteht aus einem relativ harten Aussenteil und einem plastisch verformbaren Kernteil.

Gemäss der DE-A-36 31 150 wird zur Schonung der Lichtleitfaser vorgeschlagen, dass das Kernteil im Bereich der Material deformation das Aussenteil des Zentrierzylinders nicht berührt. Auch hier ist die Lichtleitfaser an der Stirnseite jedoch von plastisch verformbarem Material umgeben und ist somit auch den Verformungskräften bei der Materialdeformation ausgesetzt. Bei einer unmittelbar auf die Faser einwirkenden Materialdeformation besteht zudem die Gefahr, dass die Faser in Längsrichtung einer zu starken Biegung unterworfen wird. Die Faser sollte jedoch gerade an ihrem äussersten Ende wenn möglich keine Krümmung und keine schiefe Lage aufweisen.

Es ist daher eine Aufgabe der Erfindung, ein Verfahren der eingangs genannten Art zu schaffen, bei welchem die Faser während des Zentriervorgangs keinen Deformationskräften ausgesetzt ist und bei dem die Abweichungen der Mittelachse des Faserendabschnitts von der Mittelachse des Zentrierzylinders kontrollierbar sind. Es ist ausserdem eine Aufgabe der Erfindung, ein Lichtleiterendstück zu schaffen, bei dem der Kontakt der Stirnseite der Faser mit der Stirnseite eines benachbarten Endstücks verbessert wird. Diese Aufgabe wird erfindungsgemäss mit einem Verfahren gelöst, das die Merkmale von Anspruch 1 aufweist. Ein nach diesem Verfahren hergestelltes Lichtleiterendstück weist vorzugsweise die Merkmale im Anspruch 6 auf.

Das Einsetzen des Kapillarröhrchens im stirnseitigen Teil des Zentrierzylinders hat den Vorteil, dass die Materialdeformation beim Zentriervorgang nicht unmittelbar auf die Lichtleitfaser, sondern nur auf das Kapillarröhrchen einwirkt. Die Lichtleitfaser muss beim Vorzentrieren überhaupt noch nicht in das Kapillarröhrchen eingesetzt sein. Aber auch bei einem allfälligen Nachzentriervorgang mit eingesetzter Lichtleitfaser wird diese keinerlei Deformationskräften ausgesetzt, da das Kapillarröhrchen hart genug ist, um derartigen Kräften zu widerstehen. Die Lichtleitfaser ist ferner an ihrem Endabschnitt im Kapillarröhrchen gerade geführt, so dass keine unerwünschten Biegungen im Endabschnitt auftreten können.

Das Kapillarröhrchen hat ausserdem den Vorteil, dass bei einem gleich ausgebildeten Gegenstück die Kontaktfläche nur durch die beiden harten Kapillarröhrchen definiert wird. Dieser Effekt kann noch dadurch vestärkt werden, dass das Kapillarröhrchen etwas über die Stirnseite hinausragt. Damit ist aber auch gewährleistet, dass auch bei zahlreichen Kopplungsvorgängen kein Materialabrieb, z.B. des plastisch verformbaren Materials an der Stirnseite, entstehen kann.

Das Kapillarröhrchen wird vorzugsweise in eine Bohrung im Zentrierzylinder geklebt. Dabei kann ein Zweikomponenten-Klebstoff verwendet werden, bei dem sich Viskosität, Aushärtezeit, Klebeverhalten usw. genau einstellen lassen. Je nach Beschaffenheit des Kapillarröhrchens wäre es aber auch denkbar, dieses auf andere Weise in der Bohrung zu befestigen, z.B. durch einen Presssitz oder durch Löten. Das Kapillarröhrchen wird vorzugsweise aus einem sehr harten Werkstoff wie z.B. aus einem Keramikmaterial oder aus Hartmetall gefertigt. Denkbar wäre z.B. eine Aluminiumoxid- oder eine Zirkonoxid-Keramik. Diese Werkstoffe lassen sich auch in kleinsten Abmessungen noch hochpräzise bearbeiten. Selbstverständlich könnten in bestimmten Anwendungsfällen auch andere relativ harte Materialien wie z.B. Glas, gehärtetes Metall oder polykristalliner Diamant eingesetzt werden.

Das Kapillarröhrchen kann entweder so ausgebildet sein, dass es über seine gesamte Länge den gleichen Durchmesser aufweist. In diesem Fall wird die Bohrung am Zentrierzylinder vorzugsweise zweistufig ausgebildet, wobei das Röhrchen von einem zweiten Abschnitt gehalten wird, welcher der Stirnseite abgewandt ist. Ueber den ersten Abschnitt erstreckt sich ein Ringspalt zwischen Kapillarröhrchen und Bohrung, der den Klebstoff aufnimmt. Der Ringspalt wird an der Stirnseite durch eine konzentrische, ringförmige Stauchung geschlossen. Das Kapillarröhrchen kann aber auch Endabschnitte mit einem gegenüber dem Mittelabschnitt etwas grösseren Durchmesser aufweisen. In diesem Fall kann die Bohrung im Zentrierzylinder über die gesamte Länge den gleichen Durchmesser aufweisen, wobei die Endabschnitte des Kapillarröhrchens passgenau in die Bohrung passen. Diese Variante ist fertigungstechnisch etwas aufwendiger, sie erlaubt jedoch unter bestimmten Voraussetzungen, das Vorzentrieren ganz wegzulassen, so dass nur noch ein Nachzentrieren mit eingesetzter Faser erforderlich ist.

Weitere Vorteile und Einzelmerkmale der Erfindung ergeben sich aus den nachstehend beschriebenen Ausführungsbeispielen, die in den Zeichnungen dargestellt sind. Es zeigen:

Figuren 1a bis 1d verschiedene Verfahrensschritte des Zentriervorgangs,

Figur 2 einen Querschnitt durch ein fertiges Lichtleiterendstück,

Figur 3 ein abgewandeltes Ausführungsbeispiel eines Lichtleiterendstücks vor dem Zentrieren,

Figur 4 das Lichtleiterendstück gemäss Figur 3 nach dem Zentrieren, und

Figur 5 eine Draufsicht auf ein Lichtleiterendstück mit angedeutetem Stauchwerkzeug zum Nachzentrieren.

Figur 1a zeigt einen zur Aufnahme eines Kapillarröhrchens vorbereiteten Zentrierzylinder 2, bestehend aus einem relativ harten Aussenteil 10, das mit einem plastisch verformbaren Kernteil 11 gefüllt ist.

Das Aussenteil besteht vorzugsweise aus Hartmetall, aus gehärtetem Metall oder aus Keramik, während das Kernteil aus einer plastisch verformbaren Metallegierung oder evtl. auch aus einem Buntmetall gefertigt sein kann. Der Aussenmantel 4 des Zentrierzylinders 2 ist hochpräzise auf Endmass bearbeitet.

Die Stirnseite 3 des Zentrierzylinders weist unter einem Radius R eine konvexe Wölbung auf. Dieser Radius kann beispielsweise zwischen 20 und 70 mm betragen. Alternativ könnte die Stirnseite 3 aber auch unter einem sehr flachen Winkel von wenigen Grad kegelstumpfförmig angeschrägt sein. Die Wölbung bzw. die Anschrägung bezweckt, dass zwischen zwei gegeneinander gerichteten Lichtleiterendstücken ein stirnseitiger Kontakt nur gerade zwischen den Stirnseiten der Kapillarröhrchen besteht.

Im weichen Kernteil 11 ist eine axiale Bohrung 7 angeordnet, welche aus einer ersten Stufe 12 mit einem Durchmesser a und aus einer zweiten Stufe 13 mit einem Durchmesser b besteht. Eine rückseitige Mantelbohrung 17 dient dazu, denjenigen Teil der Lichtleitfaser aufzunehmen, der nicht vom Aussenmantel befreit ist.

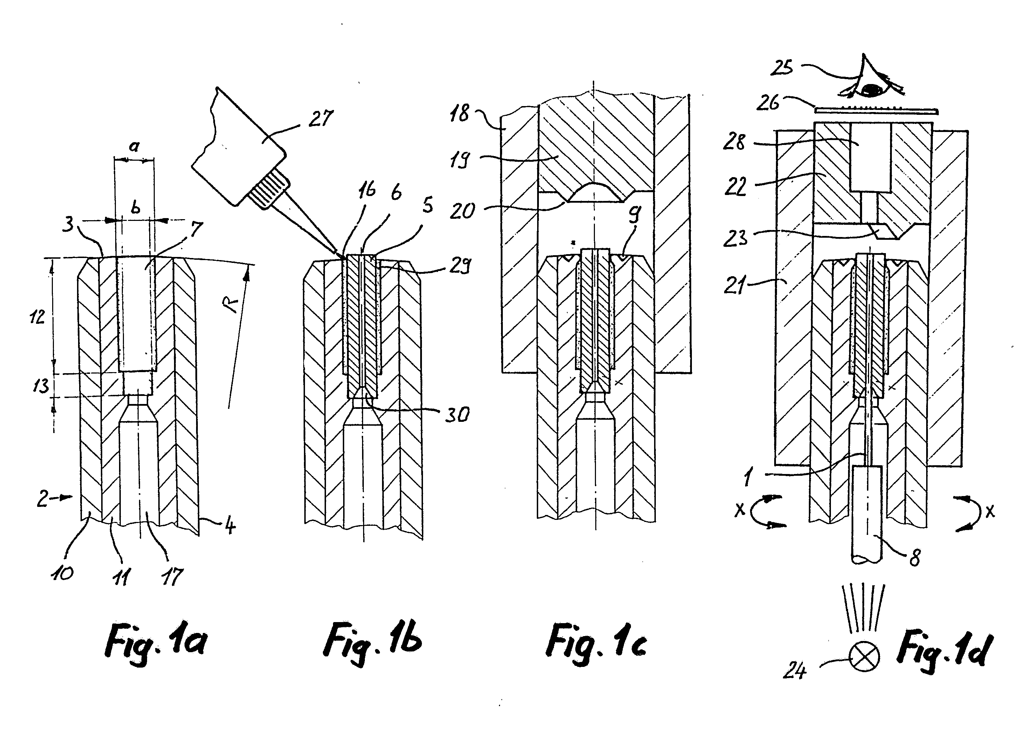

Figur 1b zeigt das in die Bohrung 7 eingesetzte Kapillarröhrchen 5. Das Kapillarröhrchen ist mit einer hochpräzisen axialen Bohrung 6 versehen. Auf der Rückseite ist eine Anschrägung 30 angeordnet, um später das Einführen der Lichtleitfaser zu erleichtern. Das Kapillarröhrchen 5 wird von der zweiten Stufe 13 der Bohrung 7 passgenau, z.B. mit einem Schiebesitz oder mit einem leichten Presssitz aufgenommen. Ueber die gesamte Länge der ersten Stufe 12 verbleibt ein Ringspalt 29 zwischen der Bohrung 7 und dem Kapillarröhrchen 5. Dieser Ringspalt dient zur Aufnahme des Klebstoffes 16, der aus einem Klebstoffspender 27 vorzugsweise während des Einschiebens des Kapillarröhrchens in den Zwischenraum abgegeben wird. Durch die Kapillarwirkung des Ringspaltes 29 verteilt sich der Klebstoff über die gesamte Länge. Das Kapillarröhrchen 5 ist derart dimensioniert, dass es etwas über die Stirnseite 3 hinausragt.

Nach dem Einbringen des Klebstoffes 16 ist das Lichtleiterendstück bereit für den Zentriervorgang, welcher in Figur 1c angedeutet ist. Zu diesem Zweck wird eine Führungshülse 18 über den Ausgenmantel 4 des Zentrierzylinders geschoben, wobei der Innenmantel der Führungshülse wie der Aussenmantel des Zentrierzylinders hochpräzise bearbeitet ist. In der Führungshülse 18 wird ein Prägestempel 19 mit einem Stauchring 20 gegen die Stirnseite 3 des Zentrierzylinders gepresst. Dabei entsteht eine ringförmige Stauchung 9 um das Kapillarröhrchen 5, wobei gleichzeitig der Ringspalt 29 an der Stirnseite verschlossen wird. Bei diesem Zentriervorgang wird das Zentrum der Bohrung 6 im Kapillarröhrchen wenigstens an der Stirnseite 3 exakt auf das Zentrum des Zentrierzylinders ausgerichtet. Der Zentriervorgang ist im Detail in der EP-A-94 906 der Anmelderin beschrieben.

Nachdem das Kapillarröhrchen im Lichtleiterendstück zentriert ist, kann die von ihrem Mantel 8 befreite Lichtleitfaser 1 in das Kapillarröhrchen eingeführt und verklebt werden. Es wäre jedoch auch ohne weiteres möglich, die Lichtleitfaser bereits vor dem Zentriervorgang einzusetzen, da das Kapillarröhrchen 5 einen zuverlässigen Schutz vor Krafteinwirkungen bildet. Da die eingesetzten Faserkerne nicht in jedem Fall absolut zentrisch angeordnet sind, werden die Lichtleiterendstücke einem Nachjustierprozess unterworfen. Dieser ist in Figur 1d angedeutet. Der Zentrierzylinder 2 wird derart in eine Halterung 21 eingespannt, dass er in Pfeilrichtung x drehbeweglich bleibt. In der Halterung 21 ist ein Nachprägestempel 22 mit einem Stauchsegment 23 angeordnet. Ueber eine Oeffnung 28 im Nachprägestempel 22 kann das Ende der Lichtleitfaser durch ein hier nicht näher dargestelltes Mikroskop betrachtet wer den. Zu diesem Zweck wird über eine Lichtquelle 24 Licht in die Leichtleitfaser 1 eingespeist. Das Auge 25 des Betrachters sieht dabei den Faserkern durch eine Kontrollscheibe 26, die mit einer Zentrumsmarkierung versehen ist.

Der Zentrierzylinder 2 wird nun in der Halterung 21 so lange gedreht, bis derjenige Sektor, in welchem eine Exzentrizität festgestellt wird, im Bereich des Stauchsegments 23 liegt. Dann wird der Nachprägestempel 22 bei gleichzeitiger visueller Beobachtung des Faserkerns so lange gegen die Stirnseite 3 gepresst, bis auch die allenfalls noch vorhandene Exzentrizität des Faserkerns eliminiert ist. Der Nachjustiervorgang und die dazu erforderliche Vorrichtung sind im Detail in der EP-A-213 067 der Anmelderin beschrieben.

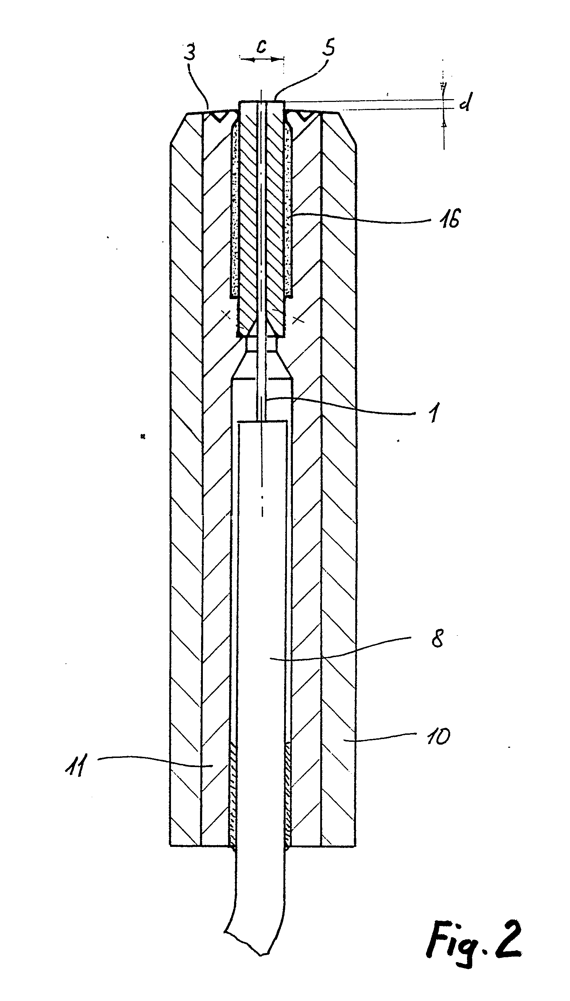

Figur 2 zeigt in stark vergrösserter Darstellung ein fertig justiertes Lichtleiterendstück bestehend aus dem harten Aussenteil 10, dem plastisch deformierbaren Kernteil 11 mit dem darin fixierten und zentrierten Kapillarröhrchen 5. Der Mantel 8 ist mit dem Kernteil 11 verklebt, so dass eine feste Verbindung gewährleistet ist. Der Durchmesser c des Kapillarröhrchens 5 beträgt weniger als 0,5 mm, beispielsweise 0,35 mm. Auch derjenige Abschnitt d, der über die Stirnseite des Zentrierzylinders hinausragt, beträgt ca. 0,1 mm oder weniger. Damit ist aber gewährleistet, dass sich in einer Steckerverbindung mit erfindungsgemässen Lichtleiterendstücken nur gerade die Kapillarröhrchen stirnseitig berühren.

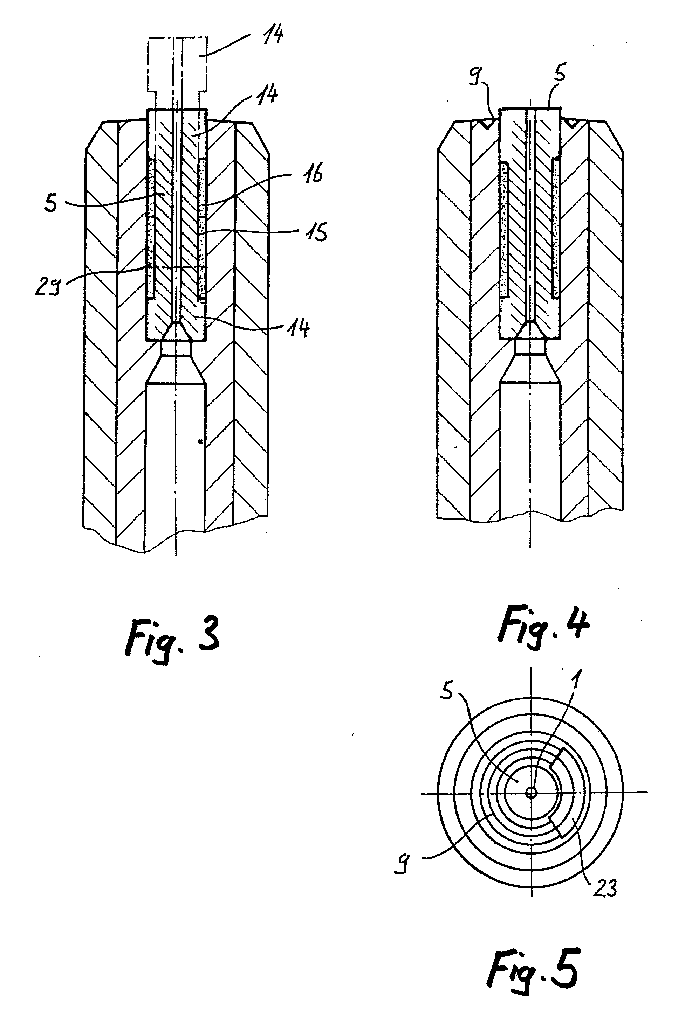

In den Figuren 3 und 4 ist ein alternatives Ausführungsbeispiel dargestellt, bei dem das Kapillarröhrchen eine etwas andere Form aufweist. Es weist an beiden Enden Endabschnitte 14 auf, die gegenüber dem Mittelabschnitt 15 einen grösseren Durchmesser aufweisen. Dagegen hat die Bohrung 7 im Zentrierzylinder über die gesamte Länge den gleichen Durchmesser. Bei ganz eingeschobenem Kapillarröhrchen 5 erstreckt sich der Ringspalt 29 ersichtlicherweise nicht bis an die Stirnseite.

Der Klebstoff 16 muss bei dieser Variante in einer Position in den Ringspalt eingegeben werden, in welcher der eine Endabschnitt 14, wie mit der strichpunktierten Linie angedeutet, noch nicht ganz eingeschoben ist. Der Zentrier- und der Nachzentriervorgang spielen sich genau gleich ab wie anhand der Figuren 1c und 1d beschrieben. Da das Kapillarröhrchen jedoch bereits an beiden Enden passgenau in der Bohrung 7 geführt ist, kann in bestimmten Fällen der Zentriervorgang gemäss Figur 1c ganz weggelassen werden, so dass allfällige Fehler nur noch mit dem Nachjustiervorgang gemäss Figur 1d auskorrigiert werden.

In Figur 5 ist eine Draufsicht auf die Stirnseite 3 eines Lichtleiterendstücks dargestellt. Dabei ist das Stauchsegment 23 zum Nachjustieren schematisch angedeutet. Falls der Zentriervorgang gemäss Figur 1c weggelassen wird, ist selbstverständlich keine ringförmige Stauchung 9 an der Stirnseite zu sehen, sondern lediglich die segmentförmige Stauchung des Nachjustiervorgangs. Das Kapillarröhrchen wird an der Stirnseite zusammen mit der eingesetzten Faser geschliffen und poliert.

**Patentansprüche**

1. Verfahren zum Zentrieren einer Lichtleitfaser (1) in einem Lichtleiterendstück, wobei die Lichtleitfaser in die axiale Bohrung eines Zentrierzylinders (2) eingeschoben und fixiert wird und anschliessend durch eine Materialdeformation an der Stirnseite des Zentrierzylinders zentriert wird, dadurch gekennzeichnet, dass im Zentrierzylinder (2) koaxial zu dessen Aussenmantel (4) ein Kapillarröhrchen (5) befestigt wird, das sich bis an die Stirnseite (3) erstreckt und das die Lichtleitfaser (1) passgenau aufnimmt, und dass die Materialdeformation (9) vor oder nach dem Einführen der Lichtleitfaser (1) derart ausserhalb des Kapillarröhrchens (5) vorgenommen wird, dass diese ausschliesslich auf das Kapillarröhrchen (5) einwirkt.

2. Verfahren nach Anspruch 1, dadurch gekennzeichnet, dass das Kapillarröhrchen in eine Bohrung (7) im Zentrierzylinder (2) eingeklebt wird.

3. Verfahren nach Anspruch 1 oder 2, dadurch gekennzeichnet, dass das Kapillarröhrchen (5) derart in einer Bohrung (7) im Zentrierzylinder (2) befestigt wird, dass an der Stirnseite (3) ein Ringspalt (29) zwischen Bohrung und Kapillarröhrchen verbleibt, und dass um das Kapillarröhrchen eine kreisförmige Stauchung (9) angebracht wird, mit welcher bei gleichzeitigen Zentrieren des Kapillarröhrchens der Ringspalt geschlossen wird.

4. Verfahren nach Anspruch 1 oder 2, dadurch gekennzeichnet dass das Kapillarröhrchen (5) derart in einer Bohrung im Zentrierzylinder befestigt wird, dass es wenigstens an der Stirnseite (3) von der Bohrung passgenau gehalten wird, und dass um das Kapillarröhrchen eine kreisförmige Stauchung (9) angebracht wird.

5. Verfahren nach einem der Ansprüche 3 oder 4, dadurch gekennzeichnet, dass am vorzentrierten Lichtleiterendstück die Relativlage des Faserendes durch Einspeisen von Licht ermittelt wird, und dass beim Feststellen einer Exzentrizität in dem betreffenden Sektor eine begrenzte, vorzugsweise segmentförmige Stauchung angebracht wird, welche der Exzentrizität entgegenwirkt.

6. Lichtleiterendstück für eine Lichtleitfaser (1), insbesondere hergestellt nach dem Verfahren nach Anspruch 1, bestehend aus einem Zentrierzylinder (2), welcher mit einer axialen Bohrung zur Aufnahme des Faserendes versehen ist, wobei der Zentrierzylinder eine Stirnseite (2) aufweist, die zum Zentrieren der Lichtleitfaser (1) durch eine Materialdeformation wenigstens teilweise aus einem plastisch verformbaren Material besteht, dadurch gekennzeichnet, dass im plastisch verformbaren Material (11) eine Bohrung (7) angeordnet ist, in welcher ein, das Faserende passgenau aufnehmendes Kapillarröhrchen (5) aus relativ hartem Material gehalten ist.

7. Lichtleiterendstück nach Anspruch 6, dadurch gekennzeichnet, dass das Kapillarröhrchen (5) aus einem Keramikmaterial oder aus Hartmetall gefertigt ist.

8. Lichtleiterendstück nach Anspruch 6 oder 7, dadurch gekennzeichnet, dass das Kapillarröhrchen (5) in die Bohrung (7) eingeklebt ist.

9. Lichtleiterendstück nach einem der Ansprüche 6 bis 8, dadurch gekennzeichnet, dass das Kapillarröhrchen (5) zylindrisch ausgebildet ist und dass die Bohrung (7) im Durchmesser zweistufig ausgebildet ist, wobei sich über die erste Stufe (12) ein Ringspalt (29) zwischen Bohrung und Kapillarröhrchen erstreckt, und das Kapillarröhrchen in der zweiten, von der Stirnseite abgewandten Stufe (13) mit geringerem Durchmesser passgenau gehalten ist, während das Kapillarröhrchen an der Stirnseite (3) durch eine konzentrische, ringförmige Stauchung (9) zentriert und gehalten ist.

10. Lichtleiterendstück nach einem der Ansprüche 6 bis 8, dadurch gekennzeichnet, dass das Kapillarröhrchen Endabschnitte (14) mit einem gegenüber dem Mittelabschnitt (15) vergrösserten Durchmesser aufweist, und dass das Kapillarröhrchen (5) an den Endabschnitten in der Bohrung (7) passgenau gehalten ist, während sich über dem Mittelabschnitt (15) ein Ringspalt (29) zwischen Bohrung und Kapillarröhrchen erstreckt.

11. Lichtleiterendstück nach einem der Ansprüche 6 bis 10, dadurch gekennzeichnet, dass das Kapillarröhrchen (5) über die Stirnseite (3) hinaus ragt.

12. Lichtleiterendstück nach einem der Ansprüche 6 bis 11, dadurch gekennzeichnet, dass die Stirnseite (3) mit Ausnahme des Kapillarröhrchens (5) konvex ausgebildet oder konzentrisch angeschrägt ist.

13. Lichtleiterendstück nach einem der Ansprüche 6 bis 12, dadurch gekennzeichnet, dass der Zentrierzylinder ein hohlzylindrisches Aussenteil (10) aus Hartmetall oder aus gehärtetem Metall oder aus Keramik aufweist, das mit einem Kernteil (11) aus plastisch verformbarem Material gefüllt ist.

Fig. 1a     Fig. 1b     Fig. 1c     Fig. 1d

EP 0 354 173 A1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 213 067 (DIAMOND)<br>* Figuren 1-4,8,9; Spalte 5, Zeilen 12-32; Spalte 7, Zeilen 50-58; Spalte 8, Zeilen 1-27 *<br>--- | 1,5,6 | G 02 B 6/38 |
| A,D | DE-A-3 631 150 (SIEMENS)<br>* Figuren 1-5; Spalte 3, Zeilen 12-68; Spalte 4, Zeilen 1-51 *<br>--- | 1,6 | |
| A | EP-A-0 025 013 (DIAMOND)<br>* Figuren 2,3,4; Ansprüche *<br>--- | 1,6,7,<br>11,13 | |
| A | DE-U-8 518 124 (SIEMENS)<br>* Figuren 1,2; Seite 4, Zeilen 24-37; Seite 5, Zeilen 1-37 *<br>--- | 6,7,11,<br>13 | |
| A | GB-A-2 105 062 (BRITISH TELECOM)<br>* Figuren 1,2; Seite 1, Zeilen 105-124; Seite 2, Zeilen 1-63 *<br>--- | 1,5 | |
| A | DE-A-3 442 822 (SIEMENS)<br>* Figuren 1,2; Seite 4, Zeilen 11-37; Seite 5, Zeilen 1-25 *<br>----- | 1,6 | **RECHERCHIERTE SACHGEBIETE (Int. Cl.5)**<br><br>G 02 B 6/00<br>B 21 K 25/00<br>B 23 P 11/00 |

Der vorliegende Recherchenbericht wurde für alle Patentansprüche erstellt

| Recherchenort | Abschlußdatum der Recherche | Prüfer |
|---|---|---|
| DEN HAAG | 24-10-1989 | MATHYSSEK K. |